# EUROPEAN PATENT SPECIFICATION

(11) **EP 4 417 872 B1**
(45) Date of publication and mention of the grant of the patent: **08.04.2026**
(21) Application number: 24157556.2
(22) Date of filing: 14.02.2024
(51) Int. Cl.: F23R 3/28, F02C 7/22, F23R 3/60

(54) **COMBUSTOR SECTION SUPPORT STRUCTURES**
BRENNKAMMERABSCHNITTSTÜTZSTRUKTUREN
STRUCTURES DE SUPPORT DE SECTION DE CHAMBRE DE COMBUSTION

(30) Priority: 14.02.2023 US 202318109768; 28.04.2023 US 202318141328
(43) Date of publication of application: 21.08.2024
(73) Proprietor: Collins Engine Nozzles, Inc., West Des Moines, IA 50265 (US)
(72) Inventor: THOMPSON, Kevin, West Des Moines (US); RYON, Jason A., Carlisle (US)
(74) Representative: Dehns

(56) References cited:
- US-A- 5 771 696
- US-A1- 2005 016 182
- US-A1- 2010 281 881
- US-A1- 2015 233 297
- US-A1- 2020 191 059

## Description

### FIELD

This disclosure relates to combustor section support structures for turbomachines.

### BACKGROUND

In gas turbine engines, the combustor section is supported by the engine case. The fuel injectors are also typically mounted to the engine case. The combustor and case are at different temperatures at different conditions. Two directions of thermal expansion typically can exist. Axial thermal expansion of different components (such as engine case and combustor liner) can occur because of different material properties and different temperatures. Also, radial thermal expansion can occur within circular components which are heated (such as engine case). If a circular component remains cold (such as an internal fuel manifold), it may not grow radially.

These thermal mismatches can cause high stresses in components which are connected rigidly. To accommodate, traditional systems include burner seals around fuel injectors and labyrinth or fish-mouth seals at other locations. Such systems may not properly meter air into the combustor (e.g., which can cause hot spots in combustor). Such systems can also include many components which adds cost and weight. Additionally, the load is carried through hot components (e.g., a dome plate and combustor liner) which don't typically have high strength at high temperatures.

Such conventional methods and systems have generally been considered satisfactory for their intended purpose. However, there is still a need in the art for improvements. The present disclosure provides a solution for this need.

US 2010281881 A1 describes a mounting system for locating a combustor and a fuel manifold of a gas turbine engine within a gas generator casing. The mounting system comprises at least three support pin assemblies which extend radially inwardly from the gas generator casing.

US 2020191059 A1 describes a fuel injector system that includes an outer support and an inner support, with a feed arm extending radially between the inner support and the outer support. A plurality of outlet openings extend in an axial direction from the feed arm for feeding respective injection nozzles.

### SUMMARY

According to the invention as defined by the claims, there is provided a combustor section support structure for a gas turbine engine that can include a fuel manifold and one or more radial stud assemblies connected to the fuel manifold and configured to allow the fuel manifold to move radially relative to an engine case and to fix the fuel manifold axially relative to the engine case. Each of the one or more radial stud assemblies can include a first portion mounted to the fuel manifold and a second portion configured to mount to an engine case. The first portion and the second portion can be configured to slide relative to each other to allow relative radial movement, but to prevent substantial axial relative movement. The first portion and the second portion form a ball joint assembly configured to allow misalignment induced rotation at the ball joint assembly.

The first portion can extend from the fuel manifold to a radial distance that is less than an inner diameter of the engine case. **In** certain embodiments, the structure can include the engine case.

The one or more radial stud assemblies can be radially aligned with a fuel inlet tube associated with the engine case. **In** certain embodiments, the structure can include a plurality of fuel nozzles connected to and supported by the fuel manifold, a dome plate connected to the plurality of the fuel nozzles, a combustor liner connected to the dome plate, and a sliding seal configured to extend from the engine case and radially supporting a downstream portion of the combustor liner.

In certain embodiments, the first portion can be a stud. The second portion can be a nut having a stud channel configured to slidably receive the stud, and outer nut threads configured to thread to a nut socket.

The one or more radial stud assemblies can further include a nut socket having inner socket threads configured to mesh with the outer nut threads. In certain embodiments, the nut socket can be attached to the engine case. **In** certain embodiments, the nut socket can be formed in the engine case.

**In** certain embodiments, the first portion can be a nut attached to the fuel manifold. The second portion can be a stud configured to be installed through the engine case. The nut can include a stud channel configured to slidably receive the stud, for example.

According to various embodiments, there is provided a structure as recited in claims 12 to 14.

According to an aspect, there is provided a turbomachine can include a combustor section support structure. The structure can be any suitable embodiment of a structure disclosed herein, for example, e.g., as described above.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a cross-sectional view of a configuration of a turbomachine which is not in accordance with the invention as defined by the claims;
Fig. 2 is a cross-sectional view of the configuration of Fig. 1, showing an alignment line/fixed axial plane;
Fig, 3 is a partial, cross-sectional view of the configuration of Fig. 1;
Fig. 4 is a close up view of the configuration of a support structure of Fig. 1;
Fig. 5 is a perspective view of an example of a nut in accordance with this disclosure;
Fig. 6 is a schematic diagram showing an arrangement of a plurality of support structures on an aspect of a fuel manifold;
Fig. 7A shows a portion of an example of a method which is not in accordance with the invention as defined by the claims;
Fig. 7B shows another portion of the example of a method of Fig. 7A;
Fig. 8 shows a configuration of a support structure which is not in accordance with the invention as defined by the claims;
Fig. 9 shows an example of a support structure which is not in accordance with the invention as defined by the claims;
Fig. 10 is a cross-sectional view of an example of a system which is not in accordance with the invention as defined by the claims; and
Fig. 11 is a perspective view of a configuration of a fuel inlet tube and an example of an outer mount of the example of Fig. 10 in accordance with this disclosure;
Fig. 12A is a schematic diagram showing an arrangement of a plurality of an embodiment of support structures on an embodiment of a fuel manifold, shown axially aligned;
Fig. 12B is a partial, cross-sectional view of the embodiment of Fig. 12A;
Fig. 12C is a schematic view of the embodiment of Fig. 12A, shown misaligned;
Fig. 12D is a partial, cross-sectional view of the embodiment of Fig. 12C;
Fig. 13A is a schematic diagram showing an arrangement of a plurality of an embodiment of support structures on an embodiment of a fuel manifold, wherein the support structures include a threaded on ball;
Fig. 13B is a partial view of the embodiment of Fig. 13A;
Fig. 13C is a partial cross-sectional view of the embodiment of Fig. 13B, showing the threaded ball not in sectional view;
Fig. 13D is a partial, cross-sectional view of the embodiment of Fig. 13C, showing the threaded ball sectioned;
Fig. 14A is a schematic diagram showing an arrangement of a plurality of an embodiment of support structures on an embodiment of a fuel manifold, shown having a ball fixed to the outer housing;
Fig. 14B is a partial view of the embodiment of Fig. 14A; and
Fig. 14C is a partial cross-sectional view of the embodiment of Fig. 14B, showing the threaded ball joint not in sectional view.

### DETAILED DESCRIPTION

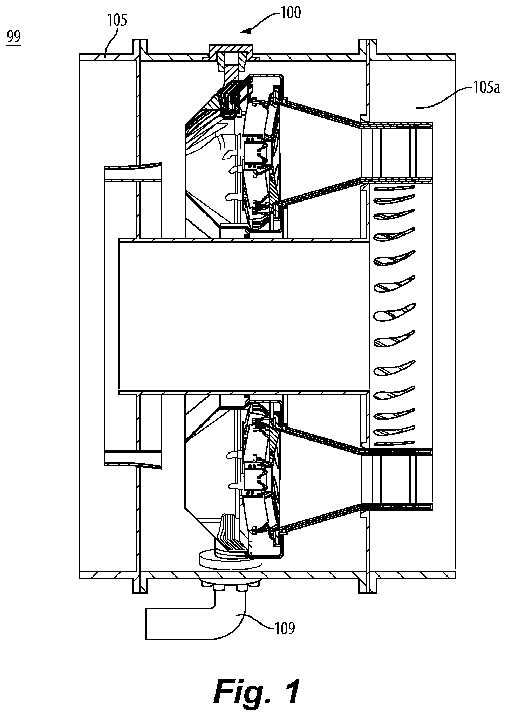

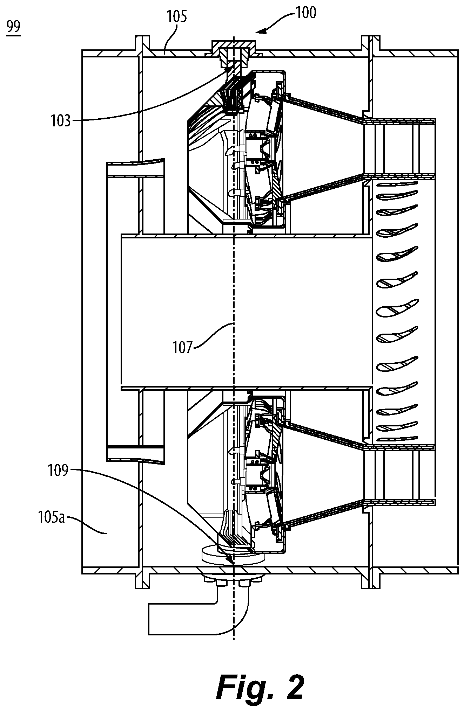

Reference will now be made to the drawings wherein like reference numerals identify similar structural features or aspects of the subject disclosure. For purposes of explanation and illustration, and not limitation, an illustrative view of an embodiment of a combustor section support structure in accordance with the disclosure is shown in Fig. 1 and is designated generally by reference character 99. Other aspects of this disclosure are shown in Figs. 2-11. Certain embodiments described herein can be used to provide support that allows radial movement due to thermal mismatch while preventing axial movement of a fuel manifold without causing axial stress.

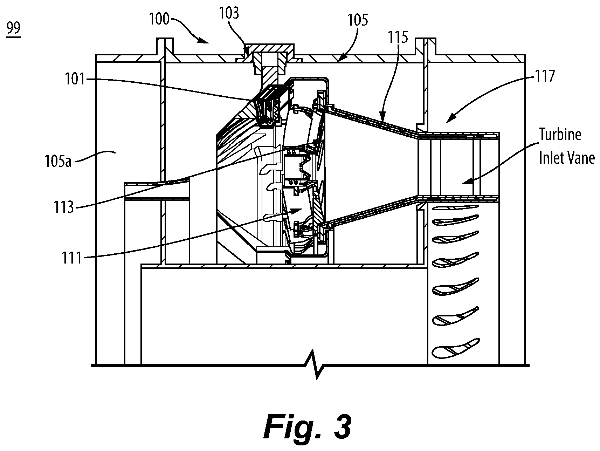

In accordance with at least one aspect of this disclosure, referring to Figs. 1-6, a combustor section support structure 100 can include a fuel manifold 101 and one or more radial stud assemblies 103 (e.g., as referenced in Fig. 3) connected to the fuel manifold 101 (e.g., as referenced in Fig. 3) and configured to allow the fuel manifold 101 to move radially relative to an engine case 105 (e.g., due to thermal growth mismatch) and to fix the fuel manifold 101 axially relative to the engine case 105. Each of the one or more radial stud assemblies 103 can include a first portion 103a mounted to the fuel manifold 101 and a second portion 103b configured to mount to the engine case 105. The first portion 103a and the second portion 103b can be configured to slide relative to each other to allow relative radial movement, but to prevent axial relative movement.

The first portion 103a can extend from the fuel manifold 101 to a radial distance that is less than an inner diameter 105a of the engine case 105. In certain embodiments, the structure 100 can include the engine case 105.

The one or more radial stud assemblies 103 can be radially aligned (e.g., along an axial plane 107 as shown in Fig. 2) with a fuel inlet tube 109 (e.g., with a structural and/or thermal expansion centerline) associated with the engine case 105. In certain configurations, the structure 100 can include a plurality of fuel nozzles 111 connected to and supported by the fuel manifold 101, a dome plate 113 connected to the plurality of the fuel nozzles 111, a combustor liner 115 connected to the dome plate 113, and a sliding seal 117 configured to extend from the engine case 105 (e.g., mounted to the engine case 105) and radially supporting a downstream portion of the combustor liner 115. The sliding seal 117 is configured to allow the combustor liner 115 to move axially (e.g., due to thermal growth when hot) and maintain a sealed relationship with the combustor liner 115. The structure 100 can include any other suitable turbomachine combustor and related components.

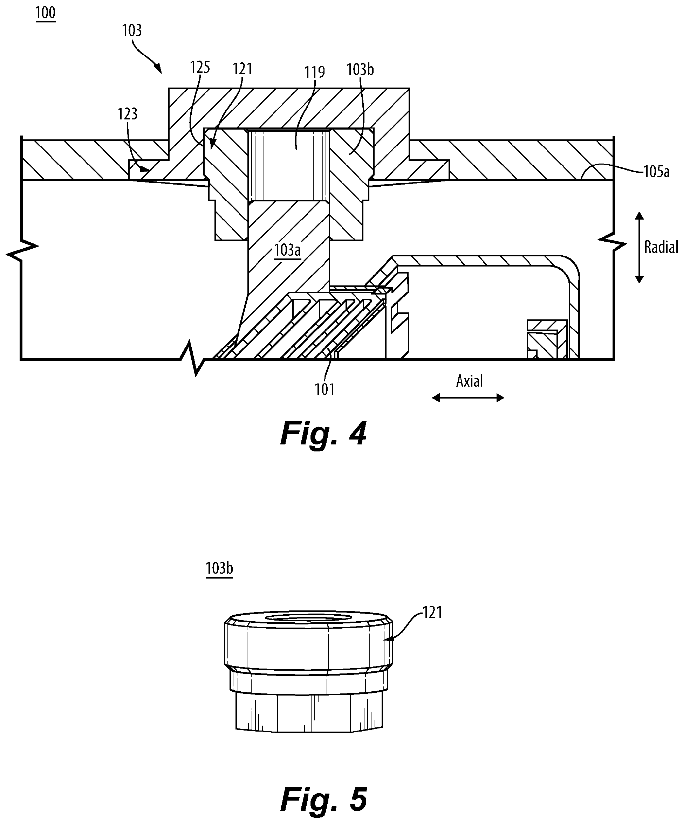

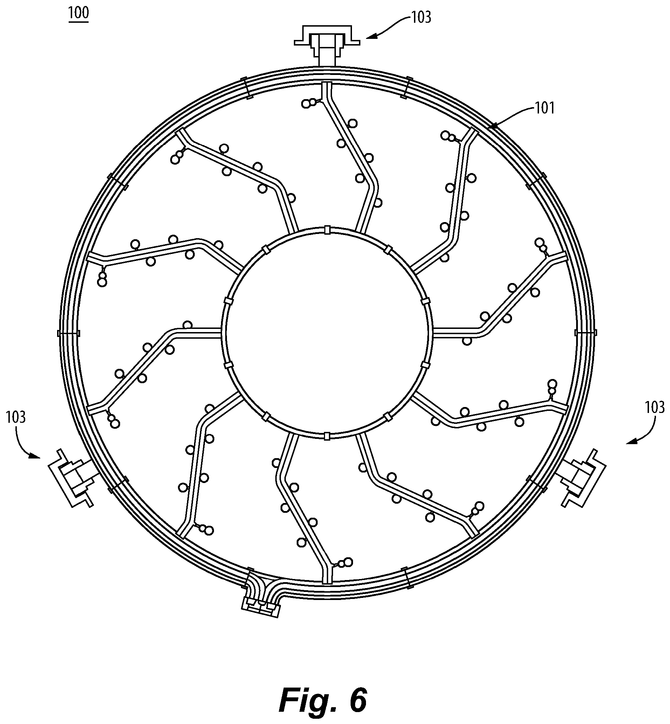

In certain configurations, e.g., as shown in Fig. 4, the first portion 103a can be a stud (e.g., as shown in Figs. 1-7B). The second portion 103b can be a nut (e.g., as shown in Figs. 4 and 5) having a stud channel 119 configured to slidably receive the stud, and outer nut threads 121 configured to thread to a nut socket 123. The assembly structure 100 can include a plurality of assemblies 103 (e.g., three evenly spaced circumferentially as shown in Fig. 6). Any suitable number and arrangement of assemblies to mount the manifold 101 as disclosed herein to allow relative radial, but not axial, thermal expansion is contemplated herein.

The one or more radial stud assemblies 103 can further include the nut socket 123 having inner socket threads 125 configured to mesh with the outer nut threads 121. In certain embodiments, the nut socket 123 can be attached to the engine case 105 (e.g., welded or otherwise fixed).

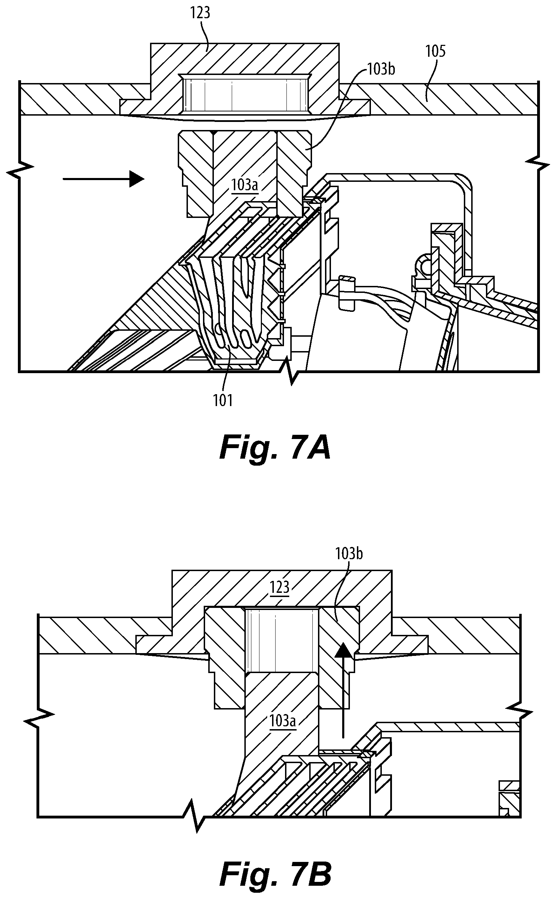

As shown in Figs. 7A and 7B, in accordance with at least one aspect of this disclosure, a method can include inserting a fuel manifold 101 axially into an engine case 105 to a mount location such that a radial stud assembly 103 attached to the fuel manifold 101 is aligned with a fuel inlet 109. The method can include moving a nut (e.g., first portion 103b) of the radial stud assembly 103 radially outward relative to a stud (e.g., first portion 103a) of the radial stud assembly 103 and the fuel manifold 101. The method can include attaching the nut to the engine case 105 (e.g., threading the second portion 103b to socket 123) such that the nut is configured to allow the stud to move radially relative to the engine case 105 and to constrain the stud axially relative to the engine case 105. In certain embodiments, attaching the nut can include threading the nut into a socket 123 associated with the engine case 105 while the stud is within a stud channel 119 of the nut.

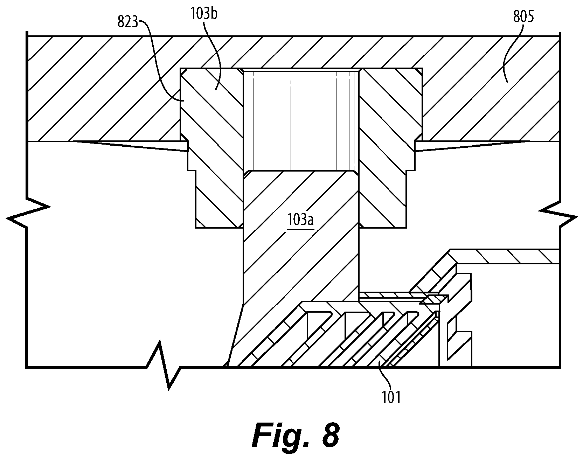

In certain aspects, referring to Fig. 8, the nut socket 823 can be formed in the engine case 805 (e.g., as shown in Fig. 8). For example, the socket 823 can be a threaded aperture define in an engine case 805 that is suitably thick to provide necessary strength.

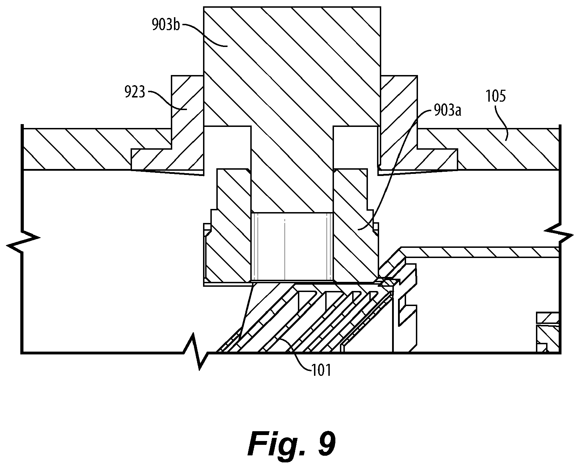

In certain aspects, e.g., as shown in Fig. 9, the first portion 903a can be a nut attached to the fuel manifold 101. The second portion 903b can be a stud configured to be installed through the engine case 105 (e.g., through socket 923). For example, the second portion 903b can thread to the socket 923, or can otherwise be inserted into and fixed to the socket 923. The nut (e.g., the first portion 903a as shown in Fig. 9) can include a stud channel (e.g., as disclosed above) configured to slidably receive the stud, for example.

In accordance with at least one aspect of this disclosure, e.g., as shown in Figs. 1-9, a turbomachine 99 can include a combustor section support structure, e.g., structure 100. The structure can be any suitable configuration of a structure disclosed herein, for example, e.g., structure 100 as described above.

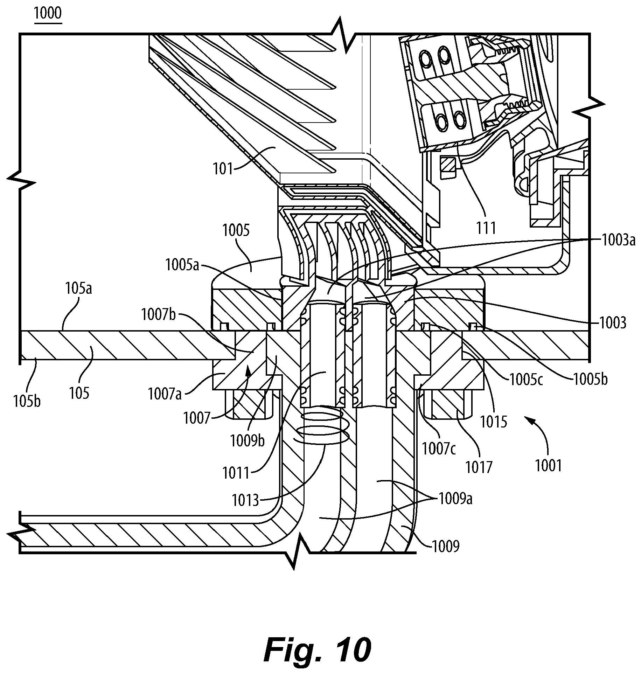

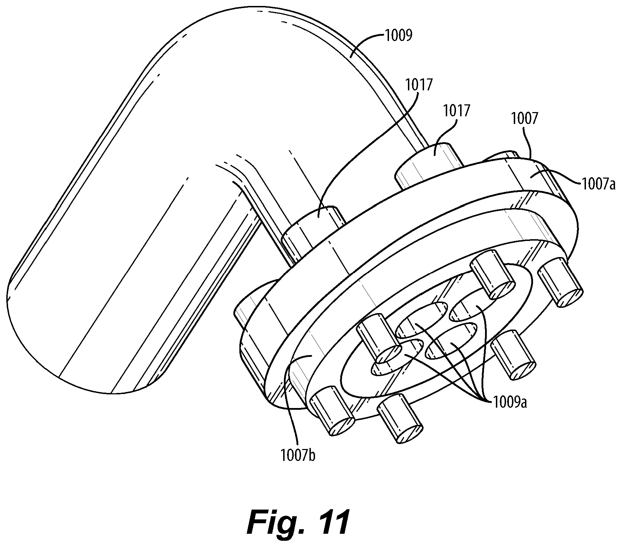

In accordance with at least one aspect of this disclosure, referring additionally to Figs. 10 and 11, a system 1000 can include a fuel manifold 101 configured to distribute fuel to one or more fuel nozzles 111 of a turbomachine 99, and a fuel inlet assembly 1001 configured to connect to the fuel manifold 101 through an engine case 105. The fuel inlet assembly 1001 can be configured to axially retain the fuel manifold 101 relative to the engine case 105 and to allow radial movement of the fuel manifold 101 relative to the engine case (e.g., due to thermal expansion mismatch). The assembly 1001 can work in concert with the structure 103 as disclosed above, and can be aligned along the axial plane 107 as described above, for example.

In certain aspects, the fuel inlet assembly 1001 can include a fuel inlet socket 1003 fixed to the fuel manifold 101. The fuel inlet socket 1003 can define one or more (e.g., four) socket fuel channels 1003a in fluid communication with one or more flow paths (not shown) of the fuel manifold 101.

The fuel inlet assembly 1001 can include an inner mount 1005 configured to abut an inner diameter 105a of the engine case 105. The inner mount 1005 can define an inner mount channel 1005a configured to receive the fuel inlet socket 1003 such that the fuel inlet socket 1003 is configured to slide radially relative to the inner mount 1005 but is retained axially by the inner mount 1005. The fuel inlet assembly 1001 can include an outer mount configured to mount 1007 to the inner mount 1005 through the engine case 105 to fix the inner mount 1005 and the outer mount 1007 to the engine case 105.

The fuel inlet assembly 1001 can include a fuel inlet tube 1009 defining one or more inlet fuel channels 1009a configured to be in fluid communication with the one or more socket fuel channels 1003a of the fuel inlet socket 1003. The inner mount 1005 and the outer mount 1007 are configured to radially retain the fuel inlet tube 1009 therebetween.

The fuel inlet assembly 1001 can include one or more transfer tubes 1011 between the one or more inlet fuel channels 1009a and the one or more socket fuel channels 1003a. The one or more transfer tubes 1011 can be configured to move relative to the fuel inlet tube 1009 and maintain engagement with the fuel inlet socket 1003 to follow radial motion of the fuel inlet socket 1003 (e.g., due to relative thermal contraction of the fuel manifold 101 relative to the engine case 105). The one or more transfer tubes 1011 can be biased toward the fuel inlet socket 1003 with one or more biasing members 1013. In certain embodiments, each of the one or more transfer tubes 1011 can be partially disposed within and sealed to a respective inlet fuel channel 1009a and a socket fuel channel 1003a (e.g., via one or more oring seals disposed in one or more seal channels as shown). In certain configurations, each of the one or more biasing members 1013 can be disposed within a respective inlet fuel channel 1009a (e.g., to push the transfer tubes 1011 against the interior walls of the fuel inlet socket 1003.

The inner mount 1005 can include an engine case seal channel 1005b that is configured to receive a first seal (not shown) to seal to the inner diameter 105a of the engine case 105. The inner mount 1005 can include a fuel inlet tube seal channel 1005c configured to receive a second seal (not shown) to seal to the fuel inlet tube 1009 e.g., an end face of the fuel inlet tube 1009 as shown).

In certain configurations, the outer mount 1007 can include an outer flange portion 1007a and a post portion 1007b. The post portion 1007b can be configured to insert into an opening 1015 in the engine case 105. The outer flange portion 1007a can be configured to limit insertion of the post portion 1007b (e.g., by contacting an outer surface 105b of the case 105). The post portion 1007b can be the same length as the engine case 105 is thick to abut the inner mount 1005 (e.g., as shown in Fig. 10). The outer mount 1007 can include an inner flange portion 1007c that is configured to radially trap the fuel inlet tube 1009 by engaging with a fuel inlet tube flange 1009b. The outer mount 1007 can include a plurality of fastener holes (not shown) each configured to allow a fastener 1017 to extend through the outer mount 1007 to interface with the inner mount 1005.

For example, the inner mount 1005 can include a plurality of engagement holes (not shown) configured to receive the fastener 1017 extending through the outer mount 1005. Each fastener 1007 can be a threaded bolt, and the engagement holes can be threaded to mesh with each threaded bolt.

In certain configurations, the inner mount 1005 can be shaped to be conformal to the inner diameter 105a of the engine case 105 (e.g., to have a matching curvature). The outer mount 1007 can be shaped to be conformal to an outer surface 105b of the engine case 105.

In accordance with at least one aspect of this disclosure, a turbomachine 99 can include an engine case (e.g., as disclosed above), a fuel manifold (e.g., as disclosed above), a fuel inlet socket (e.g., as disclosed above) fixed to the fuel manifold, an inner mount (e.g., as disclosed above) abutting an inner diameter of an engine case, an outer mount (e.g., as disclosed above) mounted to the inner mount through the engine case to fix the inner mount and the outer mount to the engine case, and a fuel inlet tube (e.g., as disclosed above). The inner mount and the outer mount can radially retain the fuel inlet tube therebetween, e.g., as disclosed above.

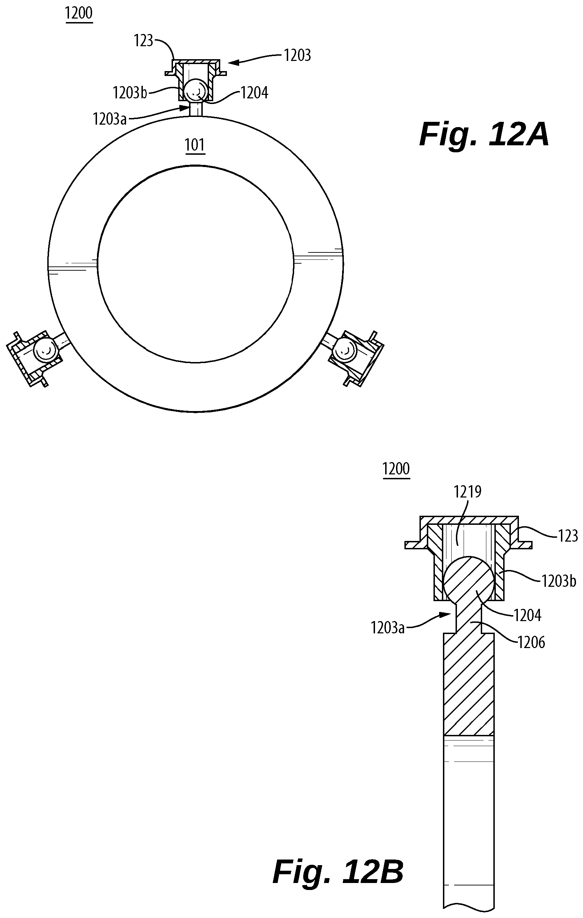

In accordance with at least one embodiment of this disclosure, referring to Figs. 12A-D, a combustor section support structure 1200 can include a fuel manifold 101 and one or more radial stud assemblies 1203 connected to the fuel manifold 101 (e.g., as described above) and configured to allow the fuel manifold 101 to move radially relative to an engine case 105 (e.g., due to thermal growth mismatch) and to fix the fuel manifold 101 axially relative to the engine case 105 (e.g., as described above. Each of the one or more radial stud assemblies 1203 can include a first portion 1203a mounted to the fuel manifold 101 and a second portion 1203b configured to mount to the engine case 105. The first portion 1203a and the second portion 1203b can be configured to slide relative to each other to allow relative radial movement, but to prevent substantial axial relative movement.

The first portion 1203a and the second portion 1203b form a ball joint assembly (e.g., made up of ball 1204 and channel 1219) configured to allow misalignment induced rotation at the ball joint assembly. For example, the first portion 1203a can include a ball 1204 at radial outward end thereof, e.g., extending from a neck 1206. The ball 1204 and the neck 1206 can be integral, for example. The ball 1204 can include a diameter about equal to the inner diameter of the stud channel 1219 to allow the ball 1204 to radially slide within the channel 1219, and to allow rotation (e.g., tilting in the axial direction) relative to the channel 1219.

Substantial axial relative movement can be defined as a distance defined by a tolerance limit as appreciated by those having ordinary skill in the art of turbomachine combustors, for example. Such tolerance limits can cause axial misalignment. Alternatively or additionally, the misalignment can be induced during installation to allow tilting of the first portion 1203a relative to the second portion 1203, and substantial axial movement can be defined as a limit induced during installation that is then reduced and/or eliminated once three or more assemblies 1203 are installed. In certain embodiments, once all assemblies 1203 are installed together the axial movement may be fixed, for example.

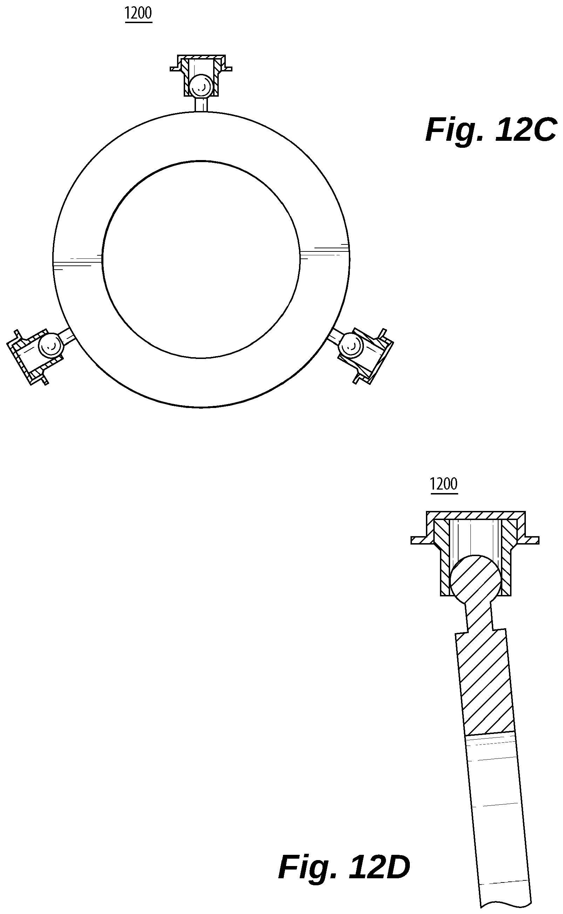

Fig. 12A and Fig. 12B show the assembly 1203 axially aligned. Fig. 12C and Fig. 12D, show the assembly 1203 misaligned as an example. In certain embodiments, the structure 1200 can be otherwise similar to the embodiment of a structure 100 as disclosed above.

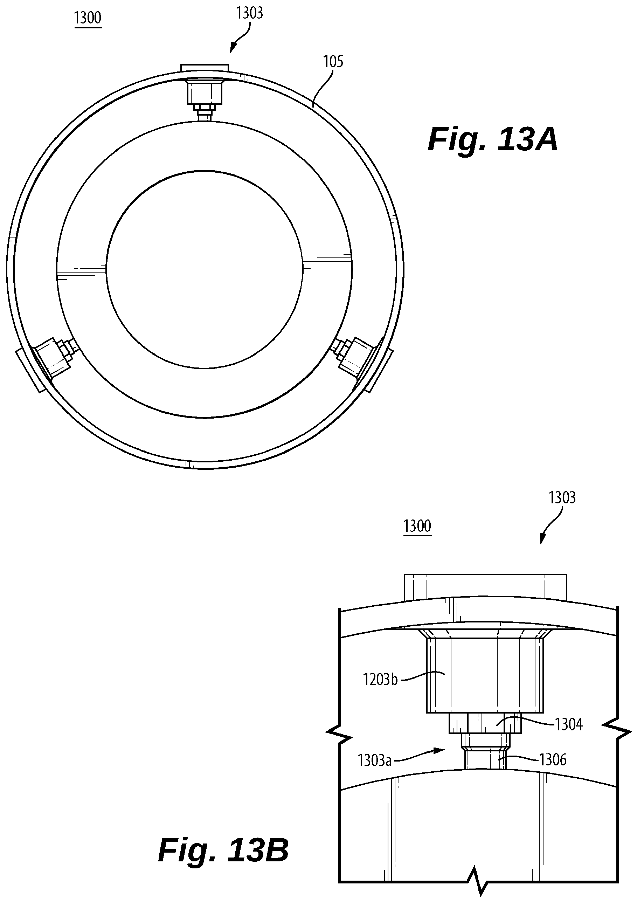

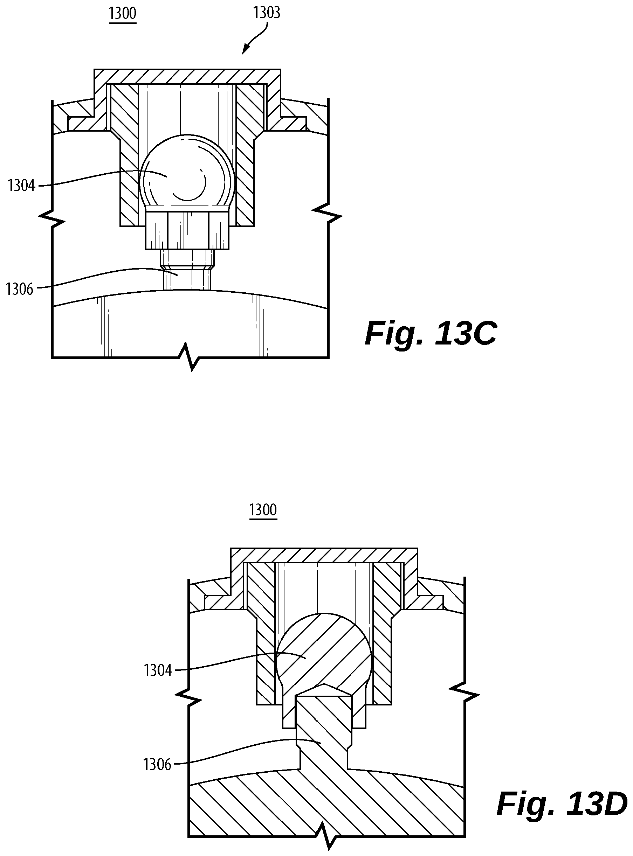

In accordance with at least one aspect of this disclosure, referring to Figs. 13A-13D, a combustor section support structure 1300 can be similar to the embodiment of a structure 1200 of Fig. 12A-2B, except that the ball 1306 can be threaded on or otherwise attached to the neck 1306 (e.g., of the first portion 1303a).

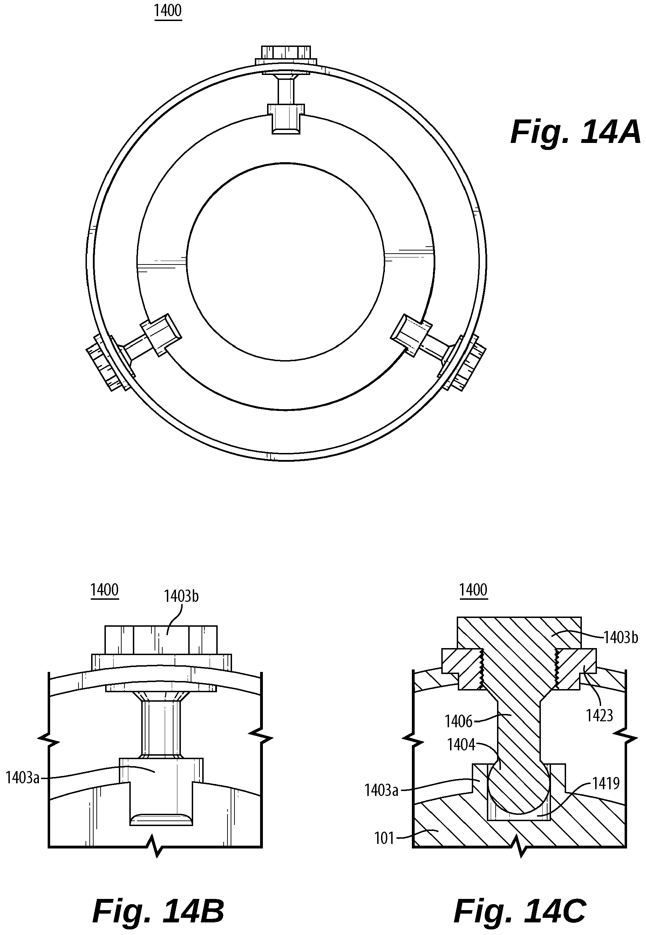

In accordance with at least one embodiment of this disclosure, referring to Figs. 14A-14C, a combustor section support structure 1400 can be similar to the configuration of as shown in Fig. 9, but include a similar ball joint assembly as disclosed in Figs. 12A-13D. For example, as shown in Fig. 14C, the structure 1400 can include a first portion 1403a that defined a stud channel 1419 configured to receive a ball 1404 of the second portion 1403b. The ball 1404 can extend from a neck 1406. The second portion 1403b can thread to the socket 1423, for example, to be fixed in place relative to the casing 105.

The manifold 101 can be configured to tilt relative to the second portion 1403b by virtue of the ball joint assembly defined by the ball 1404 and the stud channel 1419. The ball 1404 can also slide radially within the channel 1419 to allow relative radial movement.

In accordance with at least one aspect of this disclosure, a method can include axially loading a fuel manifold into an engine case of a turbomachine with an inner mount and a fuel inlet socket disposed within an inner mount channel of the inner mount, and inserting an outer mount and a fuel inlet tube having one or more biased transfer tubes into an opening of the engine case to abut the inner mount to the outer mount and to fluidly connect the one or more biased transfer tubes to the fuel inlet socket. The method can include attaching the outer mount to the inner mount to fix the outer mount and the inner mount to the engine case to axially fix the fuel manifold, the inner mount, the outer mount, the fuel inlet tube, and the fuel inlet socket such that the fuel inlet socket is configured to radially move relative to the inner mount and the biased transfer tubes are configured to push against the fuel inlet socket to maintain a sealed fluid communication with the fuel inlet socket.

Configurations can provide support of a combustor section, for example. Traditional systems require burner seals, for example. Traditional systems connect the combustor liner directly to casing, for example, and other components must be sealed in a complex manner due to axial growth. Additionally, traditional systems have a combustor load that is carried through the dome, which requires the dome to be thicker to handle forces while hot.

In certain configurations, the fuel injectors disclosed herein can be mounted to an internal fuel manifold (e.g., via a flexible/coiled inlet hose flow structure) rather than directly to the engine case. The combustor dome plates and combustor liner can also be attached to the internal fuel manifold. To accommodate the axial thermal expansion, the combustor liner can have a sliding interface near the exit of the combustor. The fuel manifold can be fixed axially through studs located circumferentially around the combustor. These studs can lock the combustor section to the engine case at a specific axial location that is coincident with the centerline of the incoming fuel inlet line. By placing the axial location of the studs in-line with the fuel inlet, there is no stress on the manifold inlet line caused by the axial thermal mismatches between the combustor liner and engine case, for example. In embodiments, the studs allow radial movement. The studs can have a sliding fit in which the movement axis is perpendicular to the engine centerline axis, for example. This can accommodate any relative radial growth that may happen between a cold fuel manifold and a hot engine case, for example.

In certain embodiments, there can be at least two studs which hold up the engine and are located circumferentially around the combustor section. These two or more studs each can have an axis that intersects the centerline of the engine, but are at an angle relative to each other. This can allow them to keep the fuel manifold concentric within the engine case, for example.

The axial plane of the studs can be the same as the axial plane of the fuel inlet. This reduces the stresses caused by thermal mismatch. The studs can be directly attached to the fuel manifold. The fuel manifold can be the main structure that supports the nozzles, dome, and combustor liner, for example. Since the manifold can remain cool, it is more capable of supporting this structure than a typical combustor section which attaches the outer combustor liner to case, and uses a hot dome to carry the load of the liner, for example.

Combustors are supported by the engine case. Fuel injectors are also typically mounted to the engine case. Thermal displacement causes stresses in fuel components. This can cause them to break, or be overdesigned. Also, the load is traditionally carried through hot combustor components, which does not have high strength at high temperatures. Certain aspects include a method of connecting an internal fuel manifold to the engine case. Aspects can include a manifold that provides a cold structure to carry the load of the combustor liner. Certain embodiments result in lighter weight components (e.g., more strength at colder temperatures), less stress in fuel components, and a way of assembling an internal manifold into a combustor section.

Certain embodiments can include an internal fuel manifold and a multipoint fuel array and embodiments for providing fuel to the fuel manifold. The fuel can be passed through a high pressure case and can be able to seal both the air and fuel. In addition, it can accommodate a thermal displacement and supply multiple separate fuel channels to allow fuel staging.

Configurations can include a fuel inlet which connects external fuel lines to an internal fuel manifold. The inlet can be responsible for thermal compliance (e.g., radially), support multiple separate fuel channels, and can allow installation inside of the engine case. The axial plane of the combustor supports can be the same as the axial plane of the fuel inlet. This can reduce the stresses caused by thermal mismatch. In configurations, the inlet only has to accommodate radial thermal growth. In configurations, the inlet can be constrained to prevent axial expansion, and embodiments can provide a structure to properly seal the fuel inlet and account for radial expansion at the fuel inlet. The fuel inlet tube can have four fuel channels for example, but can contain fewer or more. Multi-channel fuel inlets can allow flowing fuel to different circuits to control fuel flow in different states (e.g., start up, low flow idle, etc.).

Configurations can allow internal manifold installation and connection to an external fuel source. Embodiments can allow thermal expansion of the fuel components, for example.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain aspects, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

## Claims

1. A combustor section support structure (100) for a gas turbine engine, comprising:
a fuel manifold (101); and
one or more radial stud assemblies (103) connected to the fuel manifold (101) and configured to allow the fuel manifold (101) to move radially relative to an engine case (105) and to fix the fuel manifold (101) axially relative to an engine case (105), wherein each of the one or more radial stud assemblies (103) include:
a first portion (1203a) mounted to the fuel manifold (101); and
a second portion (1203b) configured to mount to an engine case (105), wherein the first portion (1203a) and the second portion (1203b) are configured to slide relative to each other to allow relative radial movement, but to prevent substantial axial relative movement,
**characterised in that** the first portion (1203a) and the second portion (1203b) form a ball joint assembly configured to allow axial misalignment induced rotation at the ball joint assembly.

2. The structure (100) of claim 1, further comprising the engine case (105).

3. The structure (100) of claim 2, wherein the first portion (1203a) extends from the fuel
manifold (101) to a radial distance that is less than an inner diameter of the engine case (105).

4. The structure (100) of claim 2, wherein the one or more radial stud assemblies (103) are
radially aligned with a fuel inlet tube (1009) associated with the engine case (105).

5. The structure (100) of claim 4, further comprising:
a plurality of fuel nozzles (111) connected to and supported by the fuel manifold (101);
a dome plate (113) connected to the plurality of the fuel nozzles (111);
a combustor liner (115) connected to the dome plate (113); and
a sliding seal (117) configured to extend from the engine case (105) and radially supporting a downstream portion of the combustor liner (115).

6. The structure (100) of any preceding claim, wherein the first portion (1203a) is a stud.

7. The structure (100) of claim 6, wherein the second portion (1203b) is a nut having a stud channel (1219) configured to slidably receive the stud, and outer nut threads (121) configured to thread to a nut socket (823).

8. The structure (100) of claim 7, wherein the one or more radial stud assemblies (103) further include a nut socket (823) having inner socket threads (125) configured to mesh with the outer nut threads (121).

9. The structure (100) of claim 8, wherein the nut socket (823) is attached to the engine case (105).

10. The structure (100) of claim 7, wherein the nut socket (823) is formed in the engine case (105).

11. The structure (100) of any preceding claim, wherein the first portion (1403a) is a nut attached to the fuel manifold (101), wherein the second portion (1403b) is a stud configured to be installed through the engine case (105), wherein the nut includes a stud channel (1419) configured to slidably receive the stud.

12. The structure (100) of any of claims 1 to 10, wherein the first portion (1203a) comprises a ball (1204) at a radial outward end thereof, extending from a neck (1206).

13. The structure (100) of claim 11, wherein the ball (1204) and the neck (1206) can be integral, or
wherein the ball (1204) is configured to be threaded on to the neck (1206).

14. The structure (100) of any of claims 12 or 13 when dependent on claim 7, wherein the ball (1204) comprises a diameter equal to an inner diameter of the stud channel (1219) such that the ball (1204) is configured to radially slide within the stud channel (1219) and such that the ball (1204) is configured to rotate relative to the stud channel (1219).

15. A turbomachine (99), comprising the combustor section support structure (100) as claimed in any preceding claim.

## Patentansprüche

1. Brennkammerabschnittstützstruktur (100) für ein Gasturbinentriebwerk, umfassend:
einen Kraftstoffverteiler (101); und
eine oder mehrere radiale Bolzenbaugruppen (103), die mit dem Kraftstoffverteiler (101) verbunden und dazu konfiguriert sind, dem Kraftstoffverteiler (101) zu ermöglichen, sich relativ zu einem Triebwerksgehäuse (105) zu bewegen, und den Kraftstoffverteiler (101) axial relativ zu einem Triebwerksgehäuse (105) zu fixieren, wobei jede der einen oder mehreren radialen Bolzenbaugruppen (103) Folgendes beinhaltet:
einen ersten Abschnitt (1203a), der am Kraftstoffverteiler (101) montiert ist; und
einen zweiten Abschnitt (1203b), der dazu konfiguriert ist, an einem Triebwerksgehäuse (105) montiert zu werden, wobei der erste Abschnitt (1203a) und der zweite Abschnitt (1203b) dazu konfiguriert sind, relativ zueinander zu gleiten, um eine radiale Relativbewegung zu ermöglichen, aber eine wesentliche axiale Relativbewegung zu verhindern,
**dadurch gekennzeichnet, dass** der erste Abschnitt (1203a) und der zweite Abschnitt (1203b) eine Kugelgelenkbaugruppe bilden, die dazu konfiguriert ist, eine durch axiale Fehlausrichtung induzierte Drehung der Kugelgelenkbaugruppe zu ermöglichen.

2. Struktur (100) nach Anspruch 1, ferner umfassend das Triebwerksgehäuse (105).

3. Struktur (100) nach Anspruch 2, wobei sich der erste Abschnitt (1203a) vom Kraftstoffverteiler (101) zu einem radialen Abstand erstreckt, der kleiner ist als ein Innendurchmesser des Triebwerksgehäuses (105).

4. Struktur (100) nach Anspruch 2, wobei die eine oder mehreren radialen Bolzenbaugruppen (103) radial mit einem Kraftstoffeinlassrohr (1009) ausgerichtet sind, das mit dem Triebwerksgehäuse (105) verknüpft ist.

5. Struktur (100) nach Anspruch 4, ferner umfassend:
eine Vielzahl von Kraftstoffdüsen (111), die mit dem Kraftstoffverteiler (101) verbunden sind und von diesem gestützt werden;
eine Kuppelplatte (113), die mit der Vielzahl von Kraftstoffdüsen (111) verbunden ist;
eine Brennkammerauskleidung (115), die mit der Kuppelplatte (113) verbunden ist; und
eine Gleitdichtung (117), die dazu konfiguriert ist, sich vom Triebwerksgehäuse (105) zu erstrecken und einen stromabwärtigen Abschnitt der Brennkammerauskleidung (115) radial zu stützen.

6. Struktur (100) nach einem der vorhergehenden Ansprüche, wobei der erste Abschnitt (1203a) ein Bolzen ist.

7. Struktur (100) nach Anspruch 6, wobei der zweite Abschnitt (1203b) eine Mutter ist, die einen Bolzenkanal (1219), der dazu konfiguriert ist, den Bolzen gleitend aufzunehmen, und ein äußeres Mutterngewinde (121), das dazu konfiguriert ist, in eine Mutternfassung (823) eingeschraubt zu werden, aufweist.

8. Struktur (100) nach Anspruch 7, wobei die eine oder mehreren radialen Baugruppen (103) ferner eine Mutternfassung (823) beinhalten, die ein inneres Fassungsgewinde (125) aufweisen, das dazu konfiguriert ist, mit dem äußeren Mutterngewinde (121) zusammenzupassen.

9. Struktur (100) nach Anspruch 8, wobei die Mutternfassung (823) am Triebwerksgehäuse (105) befestigt ist.

10. Struktur (100) nach Anspruch 7, wobei die Mutternfassung (823) im Triebwerksgehäuse (105) gebildet ist.

11. Struktur (100) nach einem der vorhergehenden Ansprüche, wobei der erste Abschnitt (1403a) eine Mutter ist, die am Kraftstoffverteiler (101) befestigt ist, wobei der zweite Abschnitt (1403b) ein Bolzen ist, der dazu konfiguriert ist, durch das Triebwerksgehäuse (105) installiert zu werden, wobei die Mutter einen Bolzenkanal (1419) beinhaltet, der dazu konfiguriert ist, den Bolzen gleitend aufzunehmen.

12. Struktur (100) nach einem der Ansprüche 1 bis 10, wobei der erste Abschnitt (1203a) eine Kugel (1204) an seinem radial äußeren Ende umfasst, die sich von einem Hals (1206) erstreckt.

13. Struktur (100) nach Anspruch 11, wobei die Kugel (1204) und der Hals (1206) einstückig sein können, oder
wobei die Kugel (1204) dazu konfiguriert ist, auf den Hals (1206) geschraubt zu werden.

14. Struktur (100) nach einem der Ansprüche 12 oder 13, sofern von Anspruch 7 abhängig, wobei die Kugel (1204) einen Durchmesser umfasst, der gleich einem Innendurchmesser des Bolzenkanals (1219) ist, derart, dass die Kugel (1204) dazu konfiguriert ist, radial im Bolzenkanal (1219) zu gleiten, und derart, dass die Kugel (1204) dazu konfiguriert ist, sich relativ zum Bolzenkanal (1219) zu drehen.

15. Turbomaschine (99), umfassend die Brennkammerabschnittstützstruktur (100) nach einem der vorhergehenden Ansprüche.

## Revendications

1. Structure de support de section de chambre de combustion (100) pour un moteur à turbine à gaz, comprenant :
un collecteur de carburant (101) ; et
un ou plusieurs ensembles de goujons radiaux (103) reliés au collecteur de carburant (101) et configurés pour permettre au collecteur de carburant (101) de se déplacer radialement par rapport à un carter de moteur (105) et pour fixer le collecteur de carburant (101) axialement par rapport à un carter de moteur (105), dans laquelle chacun du ou des ensembles de goujons radiaux (103) comprend :
une première partie (1203a) montée sur le collecteur de carburant (101) ; et
une seconde partie (1203b) configurée pour être montée sur un carter de moteur (105), dans laquelle la première partie (1203a) et la seconde partie (1203b) sont configurées pour coulisser l'une par rapport à l'autre afin de permettre un mouvement radial relatif, mais d'empêcher un mouvement relatif sensiblement axial,
**caractérisée en ce que** la première partie (1203a) et la seconde partie (1203b) forment un ensemble joint à rotule configuré pour permettre une rotation induite par un désalignement axial au niveau de l'ensemble joint à rotule.

2. Structure (100) selon la revendication 1, comprenant en outre le carter de moteur (105).

3. Structure (100) selon la revendication 2, dans laquelle la première partie (1203a) s'étend à partir du collecteur de carburant (101) jusqu'à une distance radiale qui est inférieure à un diamètre interne du carter de moteur (105).

4. Structure (100) selon la revendication 2, dans laquelle le ou les ensembles de goujons radiaux (103) sont alignés radialement avec un tube d'entrée de carburant (1009) associé au carter de moteur (105).

5. Structure (100) selon la revendication 4, comprenant en outre :
une pluralité de buses de carburant (111) reliées et supportées par le collecteur de carburant (101) ;
une plaque en forme de dôme (113) reliée à la pluralité de buses de carburant (111) ;
une chemise de chambre de combustion (115) reliée à la plaque en forme de dôme (113) ; et
un joint coulissant (117) configuré pour s'étendre à partir du carter de moteur (105) et supportant radialement une partie en aval de la chemise de chambre de combustion (115).

6. Structure (100) selon une quelconque revendication précédente, dans laquelle la première partie (1203a) est un goujon.

7. Structure (100) selon la revendication 6, dans laquelle la seconde partie (1203b) est un écrou ayant un canal de goujon (1219) configuré pour recevoir de manière coulissante le goujon, et des filetages d'écrou externes (121) configurés pour se visser dans une douille à écrou (823).

8. Structure (100) selon la revendication 7, dans laquelle le ou les ensembles de goujons radiaux (103) comprennent en outre une douille à écrou (823) ayant des filetages de douille internes (125) configurés pour s'engrener avec les filetages d'écrou externes (121).

9. Structure (100) selon la revendication 8, dans laquelle la douille à écrou (823) est fixée au carter de moteur (105).

10. Structure (100) selon la revendication 7, dans laquelle la douille à écrou (823) est formée dans le carter de moteur (105).

11. Structure (100) selon une quelconque revendication précédente, dans laquelle la première partie (1403a) est un écrou fixé au collecteur de carburant (101), dans laquelle la seconde partie (1403b) est un goujon configuré pour être installé à travers le carter de moteur (105), dans laquelle l'écrou comprend un canal de goujon (1419) configuré pour recevoir de manière coulissante le goujon.

12. Structure (100) selon l'une quelconque des revendications 1 à 10, dans laquelle la première partie (1203a) comprend une bille (1204) à une extrémité radialement externe de celle-ci, s'étendant à partir d'un col (1206).

13. Structure (100) selon la revendication 11, dans laquelle la bille (1204) et le col (1206) peuvent être formés d'un seul tenant, ou
dans laquelle la bille (1204) est configurée pour être filetée dans le col (1206).

14. Structure (100) selon l'une quelconque des revendications 12 ou 13 lorsqu'elle dépend de la revendication 7, dans laquelle la bille (1204) comprend un diamètre égal à un diamètre interne du canal de goujon (1219) de sorte que la bille (1204) soit configurée pour coulisser radialement à l'intérieur du canal de goujon (1219) et de sorte que la bille (1204) soit configurée pour tourner par rapport au canal de goujon (1219).

15. Turbomachine (99), comprenant la structure de support de section de chambre de combustion (100) selon une quelconque revendication précédente.
